# EUROPEAN PATENT APPLICATION

(11) **EP 1 475 734 A2**
(43) Date of publication of application: **10.11.2004**
(21) Application number: 04101335.0
(22) Date of filing: 31.03.2004
(51) Int. Cl.: G06F 17/60

(54) **Alert Notification Management**

(30) Priority: 31.03.2003 US 458396 P; 23.12.2003 US 742833; 31.03.2003 US 458397 P; 23.12.2003 US 742794
(71) Applicant: SAP Aktiengesellschaft, 69190 Walldorf (DE)
(72) Inventor: Heinzel, Thomas, CA 94117 San Francisco (US); Gschiermeister, Claus, 76227 Karlsruhe (DE); Huang, Philip, CA 94539 Fremont (US)
(74) Representative: Schneider, Günther M., Dr.-Ing.

(57) **Abstract**

The invention provides methods and apparatus, including computer program products, implementing using techniques for encapsulating functions to select or filter alerts relevant for messaging to specific recipients, to create appropriate alert notification messages and to actively send them through various message channels. This is done according to rules depending on content of alert, recipient, and time. The present invention allows selecting alerts from connected applications, to process them, and to send alert notification messages to the intended recipients.

## Description

This application relates to alert notification management, and more particularly to methods and systems for informing parties of alert situations.

Computer systems, and in particular distributed computer networks that execute application programs may encounter exceptional situations. These exceptional situations may be unexpected, and may have impact on other parties participating at the network. Therefore, the applications of the computer system or the distributed computer network generate alerts to inform one or more users about the exceptional situation. Such kinds of alerts may be the termination of a contract, a delivery problem for an order, a decline in revenue, or technical problems in a system.

It is an object of the present invention to provide methods to extend the functionality for transmitting alerts arising from several industrial applications in a systematic and thoroughly controllable way.

According to the first embodiment of the invention, a method of transmitting alert notification messages is provided, the alert notification messages corresponding to alerts, the alerts being indicative of exceptional situations in at least one industrial application, wherein the alerts from at least one industrial application are collected, and at least one alert notification message is generated and sent out to at least one recipient through at least one transmission channel, whereby alert collecting, alert notification message generating and sending out is controlled according to an alert notification profile, the alert notification profile being configured to comprise information relating to at least one of:
a group of recipients;
a time schedule for transmission;
a channel of transmission;
a method to create text out of the alert.

Advantageous implementations can include one or more of the following features. Exceptional situations may be defined as a relation of at least one variable of the respective industrial application to at least one predetermined value. An alert notification message can correspond to an alert.

Alerts may be aggregated in a centralized engine. The alerts may be filtered, aggregated, bundled in statistic tables according to configurable rules. The alert notification profile may be administrated in the centralized engine.

Furthermore, the alert notification profile may be configured to comprise information relating to a time schedule for retrieval of alerts from an industrial application. The alert notification profile may be configured to further comprise a transmission format for the alert notification message.

At least one alert may be collected which is sent by the at least one industrial application.

The collected alerts may be triggered by a predetermined event in the same or another industrial application.

Status information may be received to select alerts that need to be taken into account for the notification messages.

Alert notification messages may be re-sent depending on status information on the respective alert.

The transmission channels may comprise at least one of SMS, WAP, fax, pager, telephone, cellular phone, and electronic mail.

The alert notification profile may be administrated by a recipient.

One of the advantages is that the present invention provides various possibilities to process the plurality of alerts, and the possibility to determine the intended recipients for the notifications, and to set exactly the respective recipient, the medium, and the content of the notification messages that should be sent.

Hereto, alert notification profiles are maintained. In these profiles, the kind of notification, the recipient, the medium, the message format, which kind of alert, and in which time limit (due terms), a notification should be done. The recipient can be a system user, a partner, or a direct e-mail address, fax number or pager number.

The medium, via which notifications should be transmitted, can be set either explicitly or by timing rules, which may vary depending on the particular user. For example, during working hours, the notification may be transmitted via e-mail, and during week-ends and nights via a pager.

In a further aspect, the alerts are processed depending on the channel of transmission. The processing may include aggregation of messages according to predefmable parameters or according to statistic criteria over all the applications. The messages may be directly comprised within an e-mail, or as attachment in the form of a table sheet or a word file.

The inventive methods comprise one or more mechanisms to collect the alerts from the applications. In the pull-mechanism, alerts are automatically retrieved from the applications, and corresponding notifications are transmitted according to the respective notification profiles. In the push-mechanism, the connected application transmits alerts to the system according to the invention. The system processes these alerts, and transmits notifications based on the alerts according to the respective notification profiles. In the event-mechanism, one of the connected applications sends a trigger to the system according to the invention if a particular event happens. Then, the system according to the invention transmits notifications according to the relevant notification profiles.

In a further aspect, the present invention manages escalation processes. Based on an alert, the system transmits an alert notification according to the notification profile. If an alert is not addressed to by the intended user after a predetermined time, the notification is transmitted to a second user, e.g. to the group leader.

The alert notification is a generic engine which is developed as an encapsulated package that is part of mySAP SCM4.0 (a software product delivered by SAP). Alert notification is linked e.g. to APO alert monitor. The interfaces can also be used in conjunction with other applications. The selection of alerts is done by the respective application. The alert notification engine does not store alerts. Besides configuration, it contains only run-time transactional data. Alert notification determines recipients of alerts according to notification profiles. The determination of recipients is done within the alert notification engine according to the notification profiles that users or an administrator have set up. Users might be grouped according to business partners and an administrator might be allowed to maintain data for one or several specific business partners only.

Alert messages (texts and attachments) are compiled within the alert notification engine according to the message mode. Specialized implementations for specific customers can be added by using the BADI technique (Business Add-In, a technology delivered by SAP). The information needed comes from the application (e.g. APO alert monitor) and the notification profile. The message content is partly related to the message channel. Detailed user time setting for message channels can be maintained within the alert notification engine according to the invention.

The message channel is determined in the alert notification engine and passed along with recipient and message content into the SAP technology that provides the technical functions of sending out alerts.

Alert notification may be integrated with an alert monitor. The alert notification interfaces are built in a generic way, so that other applications can make use of the functions of alert notification in a similar way as the APO alert monitor.

Thus, the present invention allows selecting alerts from connected applications, to process them, and to send alert notification messages to the intended recipients.

This embodiment of the present invention provides flexible communication settings to determine message content and recipients using notification profiles in the following areas:
Configure alert selections, prioritization, message modes for each recipient;
Configure frequency of alert notification dependent on settings;
Configure (re-)notification for unconfirmed and overdue alerts (escalation process);

- Support of different message modes, which are needed to deal with the large number of alerts that might occur:
   Individual messaging of single messages for each alert;
   Collective messaging of several alerts in one message;
   Aggregated messaging of information on alert numbers;
- Support of different message channels, as for example email, telefax, pager, SMS (short message service in GSM), WAP (wireless application protocol) pages, portal inbox, and integration with external messaging applications;
- User time settings for message channel:
   Flexible notification of users/partners with regard to message channel;
   Rules depending on (recurring) time intervals including calendar functionality;
   Maintained by user or administrator;
- Pull notification mechanism:
   Periodic/scheduled search for relevant data;
   Dependent on frequency defined in communication settings;
- Push notification mechanism:
   Direct notification when alerts are created;
   Only possible for alerts that are actively posted by applications;
   In the context of APO alert monitor relevant for all data base alerts;
- Event based notification mechanism:
   External events lead to a pull for relevant message content by the Alert notification engine;
   Supply chain event management (SCEM) integration;
   General application integration;
- Escalation mechanism:
   Notify responsible person/supervisor if an alert is not confirmed or deleted within a predefined time period;
   Flexible combination of notification levels;
- Representative rules:
   Interface for rules to be provided by applications (APO alert monitor).

In a further embodiment, the invention provides a method of storing alerts in a database, the alerts originating from at least one industrial application due to exceptional situations, whereby the alerts are represented as objects, each object corresponding to a one of a number of configurable alert types, wherein each alert type is configured to comprise at least one of:
an ID for uniquely identifying the alert;
information representative of the type of alert;
message text being descriptive of the alert;
a set of parameters representative of business or control objects associated with the alert;
an alert scope being representative of the relevance for partners or users;
feedback information being representative of time and identity of acknowledging the alert by a partner or user;
status information for controlling follow-up actions;
validity time information;
priority information.

For each alert type a scheme of database tables and corresponding code segments to access the database tables may be generated.

Herein, an active alert list may be maintained in which alerts are inserted which have a valid time information, and, separately, an alert history list is maintained in which alerts which are no longer valid are moved from the active alert list.

The alert lists may comprise the alerts together with information relating to the type of alert.

The alerts in the lists may be selected according to predefined parameters.

An alert may be stored together with time stamp information, the time stamp information relating to the time of origin of the exceptional situation in the at least one industrial application.

The alert may be stored together with status information, the status information relating to an undertaken action with respect to the exceptional situation.

A history list of commands made by users and partners relating to an alert may be stored.

Furthermore, a history list of acknowledgement and status values set by users and partners relating to an alert may be stored.

The scope of alert may be restricted to an application area, the application area being a parameter which is useful for the industrial applications to distinguish different sets of alert which are manipulated by different alert update processes.

The invention further comprises a computer-readable storage medium comprising program code for performing the method according to the invention.

The present invention is described in further detail with reference to the drawings, wherein:
- Fig. I: illustrates a first embodiment of the present invention;
- Fig. 2: illustrates a further embodiment of the present invention;
- Fig. 3: illustrates a system for implementing the method according to Figs. 1 and 2;
- Fig. 4: illustrates the configuration-time program flow;
- Fig. 5: illustrates the run-time program flow;
- Fig. 6: illustrates the pull scenario;
- Fig. 7: illustrates the push scenario;
- Figs. 8-12: illustrate, by way of example, screen prints of the alert notification engine;
- Fig. 13: illustrates a first embodiment of the invention;
- Fig. 14: illustrates a further embodiment of the invention;
- Fig. 15: illustrates screen prints;
- Fig. 16: illustrates a data model of alert types according to the invention;
- Figs. 17 - 25: illustrate alert structure;
- Fig. 26: illustrates an alert data model; and
- Figs.27 - 33: illustrate tables of the structures of alert parameters.

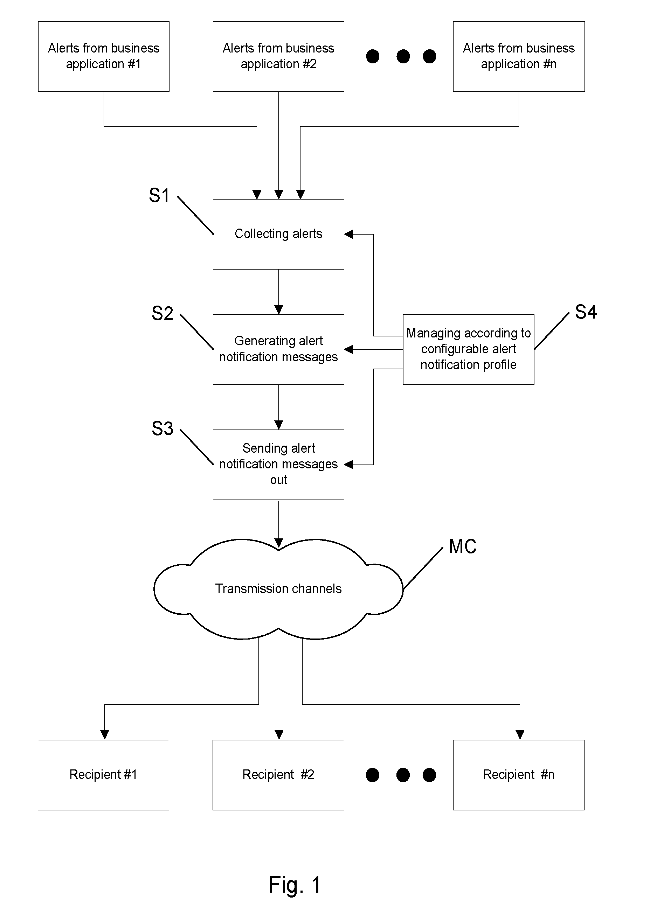

Fig. 1 shows the inventive method according a first embodiment of the invention. Alert messages from several industrial applications #5-1, #5-2, ...#5-n are collected in step S1, and alert modification messages are generated in step S2, and, in step S3, sent out to recipients #1, #2, ...#n, through respective transmission channels MC, whereby alert collecting, alert notification message generating and sending out are managed according to a configurable alert notification profile.

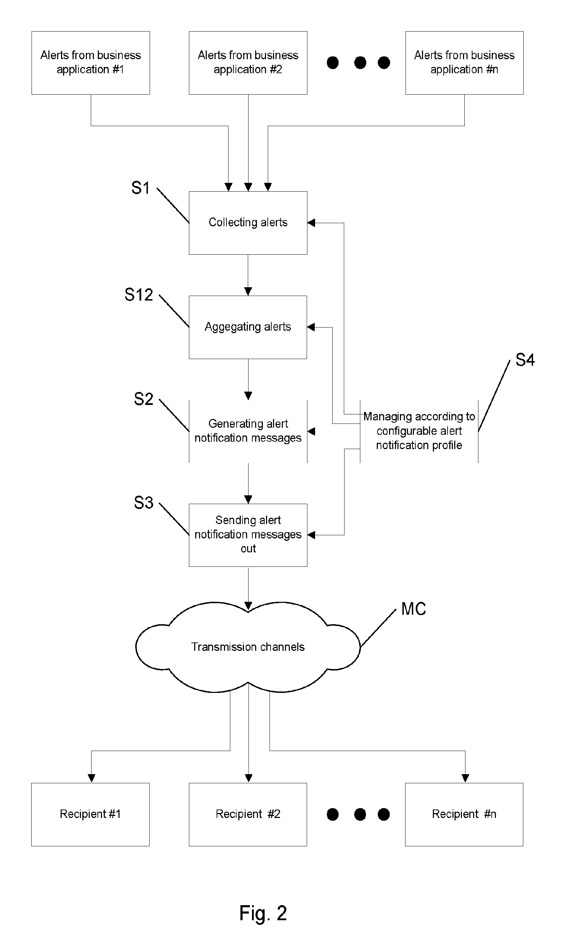

As shown in Fig. 2, alerts can be aggregated upon collecting, see step S12.

A further embodiment shows the application of the alert notification system of the present invention in a supply chain management (SCM) application, implemented in the Advanced Planner and Optimizer (APO) software package from SAP. However, SCM alert notification is a generic engine that encapsulates functions that are not specific to APO and can be used in other contexts. It is developed as a package that is part of SCM basis. Alert notification can be linked to APO alert monitor in a defined manner with few interfaces that can also be used in conjunction with other applications.

The alert monitor is a central monitoring functionality that handles exceptions from external applications. Alerts can be posted to the alert monitor (database alerts) or retrieved by the alert monitor on request (dynamic alerts). Alert type, priority and a list of parameters, which depend on the alert type, categorize alerts. Alerts are selected according to alert profiles. They are viewed and acknowledged in the alert monitor, which also provides links to APO transactions to deal with the corresponding data. The alert monitor can function stand-alone or embedded into planning transactions.

Alert management is a technology framework to inform parties of alert situations. Information can be provided through e-mail, SMS, Fax, WAP portal, SAP Portal. Users can subscribe to alert categories and specify the message channel, which they want to use.

SCM alert notification is an engine in SCM Basis that encapsulates functions to select or filter alerts relevant for messaging to specific recipients, to create the appropriate messages and to actively send them through various message channels. This is done according to rules depending on content of alert, recipient and time.

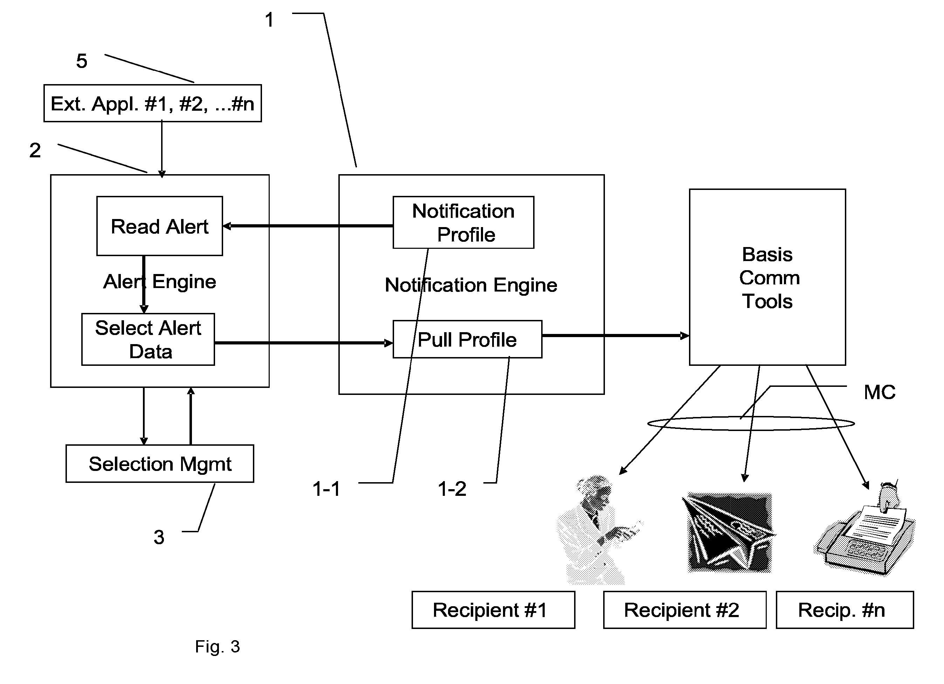

Fig. 3 shows a system which implements the methods of Fig. 1 and 2. One or several alerts originating from several industrial applications 5; #5-1, #5-2, ...#5-n, are collected in the notification engine 1, and one or several alert notification messages are generated and sent out to the respective recipients #1, #2, ...#n, through a message transmission channel MC. Collecting the alerts, generating alert notification messages and sending them out is managed in the alert notification engine 1 according to respective alert notification profiles 1-1. The alert notification profiles 1-1 are configurable. Each alert notification profile comprises information relating to the group of recipients of the alert notification messages, the time schedule and the channel of transmission of the alert notification messages. In one embodiment of the invention, the alert notification profiles 1-1 are administrated in the alert notification engine 1.

The alert notification engine 1 according to this embodiment does preferably not store alerts. The alerts are stored in alert engine 2, as described later. Selection management 3 is for selecting the alert data. The alert engine 2 is connected to the alert notification engine 1. Further connected to the alert notification engine 1 are communication tools which provide communication via messaging channels MC, e.g., e-mail, SMS, Fax, WAP portal, SAP Portal, for notification of alerts to the respective recipients #1, #2, ...#n.

Besides configuration, the alert notification engine 1 contains only run-time transactional data. SCM alert notification engine 1 makes use of SAP Technology features (alert management) for the sending alert messages. The alert notification engine 1 determines recipients of alerts according to notification profiles 1-1. These profiles can make use of functional calls into the alert monitor (or other application) for selection. The alert messages themselves (text and attachments) are compiled within the alert notification engine 1 according to the message mode that is configured there. This message content then needs to be transferred into the alert management for sending it to recipients. Detailed user time settings for message channels can be maintained within the alert notification engine 1. The message content is partly related to the message channel MC. The message channel MC is determined in the alert notification engine 1 and passed along with recipient and message content into alert management.

The primary target group is made up of all internal or external users working with the APO alert monitor and external partners and their representatives that need to be notified of exceptions. In a more general context of notification linked to other applications than the alert monitor, additional users will be targeted.

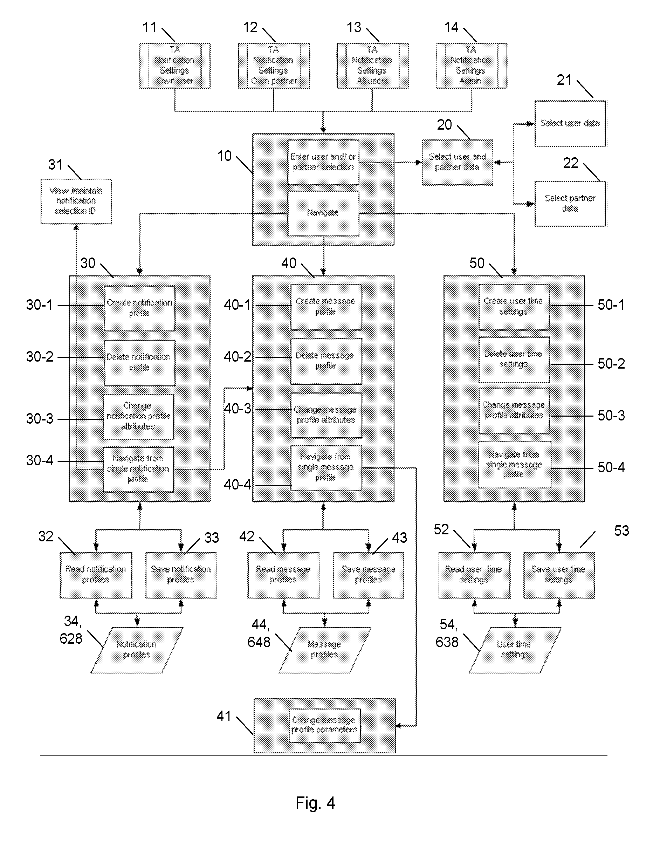

Fig. 4 shows the configuration-time program flow. Transaction notification settings are available for own users 11, for own partners (partner administrator) 12, for all the users 13, and for an overall administrator 14. The user and/or partner selection can be entered at 10. From there, the program flow branches off to a menu 20 for selecting user data 21, and partner data 22. Navigation from the main menu 10 branches off to the notification menu 30, the message profile 40, and the user time settings 50, respectively. Each of these menus offer four steps, namely create, delete, change, and navigate from the profiles 30-1, ..., 30-4; 40-1, ..., 40-4, and 50-1, ..., 50-4. The respective profiles 34, 44, and 54 can be read and saved, 32, 33; 42, 43; 52, 53.

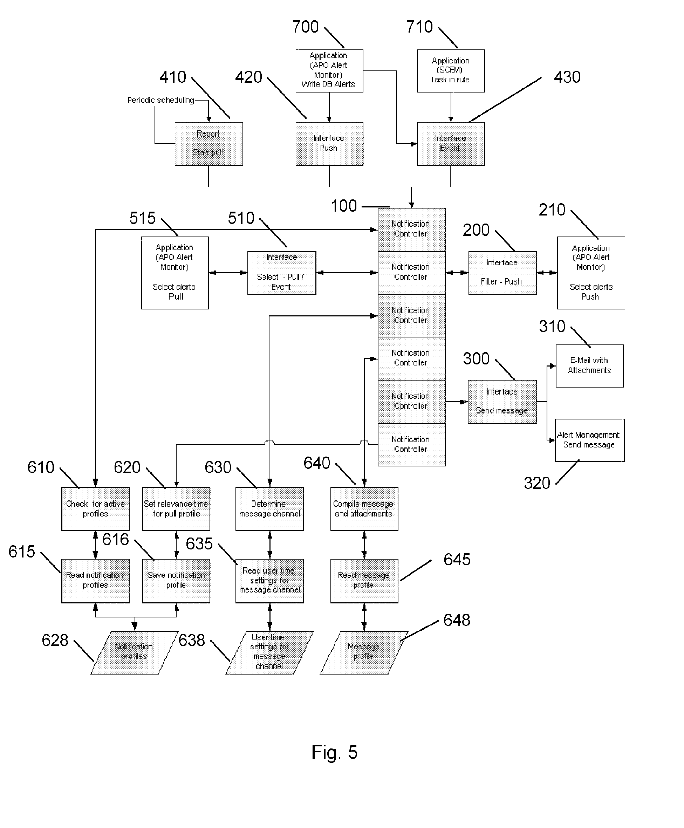

The run-time program flow is explained with reference to Fig. 5. The functions of alert notification engine 1 are controlled by notification controller 100. Alert notification engine 1 collects alert via several interfaces 420, 430. The alerts, stored in an alert database by an external application can be pushed via the push interface 420 into the alert notification engine 1. Other alerts may be transmitted to the alert notification engine 1 event-driven via event interface 430 according to an application task in a rule 435. Alerts may also be received from an external application via a pull mechanism 410. This pull mechanism 410 may be started periodically from the alert notification engine. Push and pull mechanisms are described later in more detail.

With respect to notification profiles 1-1, 628, the notification controller 100 controls checking for active profiles step 610, reading notification profiles, step 615 and further the setting of relevance time for pull profiles, step 620, and saving notification profiles, step 616.

The notification controller 100 further controls user time settings for the message channel, step, 638 allows to read the user time settings, step 635, and to determine the message channel, step 630.

In step 645, message profiles 648 are read under control of the notification controller 100. In step 640, messages and attachments may be compiled.

The notification controller further controls a filter-push interface 200 which couples to an application (APO alert monitor) for selecting alerts push 210, and a send message interface 300 for sending emails with attachments 310 and alert management send message 320.

User interfaces UI are provided to configure the notification of users and partners. These user interfaces are accessible to individual users to maintain their own data and to administrators to maintain their own, general partner's and other user's data. The administration rights may be limited to the own partner's data. The following transactions are implemented:
- Define own user notification profiles and time settings for message channels;
- Define all partners' notification profiles and time settings for message channels.

They are integrated with the definition of alert profiles 1-1.

Alert notification is integrated with the alert monitor. The following functions are provided:
- Interface 510 alert notification to alert monitor to select alerts 515 for pull/event based notification mechanism;
- Interface 420 alert monitor 700 to alert notification for push messaging;
- Interface 200 alert notification to alert monitor to filter alerts for push based notification mechanism;
- Usage of alert profiles to describe relevance conditions in notification profile;
- Integration of UI transactions for notification profile and alert profile.

It is important to note that these interfaces are designed to be independent of the alert monitor. The alert notification interfaces are built in a generic way, so that other applications, which need to send alerts or general messages, can make use of the functions of alert notification in a similar way as the APO alert monitor. This is achieved by introducing customizing that allows configuring the implementation of the alert notification interface. The key for such customizing is an "application". One needs to define these applications together with the class implementing the alert notification engine interface.

The interface for alert notification integration describes (call-back) functionality that the application needs to provide to work with alert notification.

To link an external application 5 to alert notification, the following is to be done:
- Implement an interface defined by alert notification;
- Call alert notification for push or event based notification (optional). Pull based notification works without trigger.

The alert notification functions use SAP Technology functions for appointment rules (recurring time intervals) and display of time intervals to maintain the user time settings for message channel MC. With the alert management of SAP technology the user can set the message channel MC either globally or time dependent. The flexibility of the implementation provided by the alert management is limited, so that it remains necessary to implement special appointment rules for the alert notification engine. The message format and contents can depend on message channel. Therefore it is necessary to determine the message channel before creating the messages. Overall this leads to an architecture where message channel settings are implemented within the alert notification engine, so that at run-time the message channel is determined there and transferred to the alert management.

For notification of partners, interfaces to SCM partner master data are needed to determine a partner's communication address data (email, phone for SMS, fax). Furthermore, an interface is needed to determine the partner that a user belongs to.

Communication is governed by notification profiles 1-1, 628 that are used to determine recipients of alerts and the way they are to be notified.

Each notification profile 1-1; 628 describes a communication rule in the sense that it bundles a selection of alerts with corresponding recipients and the way alert messages are to be distributed.

The notification profile 628 is similar to the former alert monitor messaging table /SAPAPO/AMSG_PRF, which will be extended to describe combinations of the following objects:
- notification selection ID; in case of alert monitor this corresponds to the ID for alert monitor overall settings, which includes the alert monitor profile;
- Partner (optional);
- User (optional);
- Communication address data (optional);
- Application ID.

Either partner, user or direct communication addresses need to be specified as a recipient. There can be more than one selection ID for notification of each recipient. Each selection ID can be used to notify several recipients. The notification selection ID is an identifier to describe a selection of alerts (or general messages) that is used by the application to select relevant message content. As an example, for the alert monitor it corresponds to the alert setting ID and describes a selection of alert types and objects relevant for notification and can also be used to define the priority of alerts.

Configuration of the recipients of notification is done either for SAP users or partners or by stating recipient addresses (email, fax, SMS) explicitly in the communication settings, so that external partners or their users do not need to be modeled within the alert notification's system. If partners or users are specified, communication settings are taken from the corresponding master data. Explicit communication addresses in the notification profile shade the master data. A notification profile is valid for one application only.

Other parameters define the details of the notification process:
- Attributes to detail the notification mechanism;
- Message mode: individual, collective, aggregated;
- Preferred message channel.

Alert settings can be evaluated and corresponding messages are created by the pull or the push mechanism, which are described later.

Message modes and message channels are described below in more detail.

Further parameters of the notification profiles 1-1, 628 describe limitations of the scope of the communication rule:
- Validity with respect to notification mechanism: push/periodic/event;
- Priority threshold for relevant messages;
- Active / inactive indicator;
- Unconfirmed only flag;
- Minimum age for unconfirmed alerts;
- Maximum age for unconfirmed alerts.

The priority threshold filters the alerts to be sent.

The active/inactive indicator can be used to switch the validity of a notification profile on or off.

Alert notification can be restricted to sending out unconfirmed alerts only. This can be used to model escalation processes. "Unconfirmed" in the example of the application being the APO alert monitor means the alerts have neither been acknowledged nor hidden by a user, but other implementation and interpretation of this indicator is possible with other applications. The selection of unconfirmed alerts can further be restricted to alerts that satisfy a minimum (and maximum) age.

The message mode - together with the notification message profile 648 and information on the message channel - describes how a message is built from the alert information coming from the application using the alert notification engine.

Alert notification can be done in one of three message modes A, B, and C. The message mode to be used in a communication rule is configured within the notification profile.

A message profile 648 describes details on how to put together the messages. The compilation of messages can be enhanced by BADI to enable customers to change the appearance of messages.

### Mode A: Separate messaging

In mode A, a separate message is created for each alert relevant for notification. The message may contain the following information:
- Short message text;
- Long message text;
- Alert parameters.

In the message profile 648, one can define which parameters are to be used.

Message texts and parameters are usually provided by the application that uses alert notification 1, e.g. the alert monitor. The alert notification 1 itself merely assembles messages from this data and distributes them. However, a message can also be specified by defining a new message category in the alert management. This category with given texts is then configured in the notification profile and used instead of the default category that uses dynamic texts.

### Mode B: Collective messaging

In mode B, all alerts relevant for notification are collected and put into a single message. Mode B can be combined with mode C in a single message. This message contains a few general descriptive lines about content, origin and time of creation and an attachment that contains all the single messages either in form of a table that is compatible with Microsoft Excel or in the form of an XML file. The attachment can also be given as content of the main message. This can be used for emails and is necessary for message of type FAX.

### Mode C: Aggregated messaging

In mode C, as in mode B, all alerts relevant for notification are collected and put into a single message. Mode C can be combined with mode B in a single message. This message contains an overview of alerts by giving the statistics of alert numbers: the alert messages are aggregated in the sense that their numbers are counted with regard to configurable categories. These categories can be freely defined from the alert parameters of the relevant alert types. The categories to be used are given by the message profile.

The alert numbers can be given in the form of either absolute numbers or relative numbers (percent) or both.

Message profiles 648 are used to describe properties of the content of alert notification messages. Type of text to be used for individual messaging: short text, long text or alert parameters. The properties are:
- Type of aggregated number to be used for aggregated alert information in collective messaging: absolute, relative (percent), or both;
- Type of attachment to be used for collective messaging;
- Alert parameters to be used for text in individual messaging;
- Alert parameters to be used for aggregation.
   The properties are specified independently of the message channel, but specific handling may apply depending on message channel.

The header table contains general properties while the parameter table describes the relevant parameters for aggregation in collective messaging and text in individual messaging respectively. Parameters are fields of the alert structures that hold the contents of the alerts.

Message channels MC are the different means to transmit information to the user. The available message channels are described below. Most MC utilize the SAP technology alert management framework, so that the corresponding SAP Technology features become available. In particular, it is possible to use a central messaging server MS that collects the messages from several systems and to link to external messaging tools offered by third party providers. Alert management offers XML based interfaces to external messaging software. User and time dependent message channel settings determine the MC to be used for the combination of user or partner and time of messaging.

If no such settings are given or if they are non-unique they can also be taken directly from the alert notification profile (similar to the communication addresses). This is valuable for scenarios where external partners or users are not modeled but communication to specific addresses by a specific channel is necessary.

The message channels that are available to users may be customized for configuration of their notification profile and user time settings according to the policies and technical details of a specific customer implementation. The following gives a list of messaging channels MC supported by the alert notification engine 1:

Email messages can be sent from the SCM system directly for message modes A, B and C. For this message channel, attachments can be used. For individual messages short text, long text and all relevant parameters are transmitted as determined by the notification message profile 1-1. The message contains at least the following parts:
- Header information (always):
   Introductory text from message profile;
   Creation time;
   Creation user;
   System of alert origin;
   Reason code (for push and event based scenarios, see below);
- Alert texts according to message profile (message mode A);
- Alert parameters as name value pairs as given by message profile (message mode A);
- Alert statistics according to alert parameters in message profile (message mode B);
- List of all alerts with detailed information in table format as attachment (message mode C);
- A hyperlink to enable navigation to the alert application, e.g. APO alert monitor's web screen.

### E-Mail via SAP Technology alert management

Emails without attachments (message modes A and B) can be sent via the SAP alert management. This allows using the features of the alert management, e.g. usage of a central messaging server, alert inbox for portal integration, confirmation of messages in this alert inbox. The messages themselves are compiled in the same way as for the direct e-mail channel.

### SMS

SMS can be used for individual messages (mode A) and aggregated messages (mode C) only. The messages are compiled in a shortened form (compared to email) to comply with the SMS format.

The SMS channel uses SAP technology alert management.

Technically, pagers are reached via the SMS channel and the pager/SMS interface (alert management). Therefore, in the alert notification engine the messages are build in the same way as for SMS and the same limitations and features apply. The pager channel uses SAP Technology alert management.

Fax messages can be sent for message modes A, B and C. For this channel, table attachments are converted into regular text at the end of the message. Otherwise it is similar to the email channel. The fax channel uses SAP Technology alert management.

All messages sent via SAP Technology alert management can be viewed in an alert inbox in a SAP Portal environment. In this way they can be viewed together with alerts posted by other applications, thus providing a single point of entry not only for SCM related but also other alerts. Alerts can be "confirmed" in the alert inbox of alert management. This constitutes an acknowledgment of receiving the message only. To confirm an alert message in the proper business context one has to use the alert application itself (e.g. the APO alert monitor).

SAP Technology alert management offers access to the alert inbox via WAP technology.

The user time settings for message channel describe the channel to be used to contact a user or partner depending on time. These settings are defined by utilizing appointment rules in SAP Technology for the individual message channels. For each available message channel, one defines whether it is used in general or not used. Then appointment rules define an exception from these general settings: either time intervals when the particular channel is to be used or excluded time intervals. One message channel is to be set as global default. These settings are possible for all users and for each user independently. The default channel is used when no other channels are found to be valid. This ensures that there is always a channel for messaging.

A new maintenance transaction groups together all settings related to alert messaging from a single point of entry. It consists of the following parts:
- Central screen to select user and/or partner and to navigate to the associated data;
- Maintenance of notification profile;
- Maintenance of message profile;
- Maintenance of user time settings;
- Navigation to user data (SU01 );
- Navigation to partner data.

For authorization purposes, the maintenance transaction comes in four different flavors represented by differing transaction codes:
1. Maintain settings for all users and partners. This includes the possibility to enter communication address data directly;
2. Maintain settings for all users;
3. Maintain settings for own users;
4. Maintain settings for own users and partners.

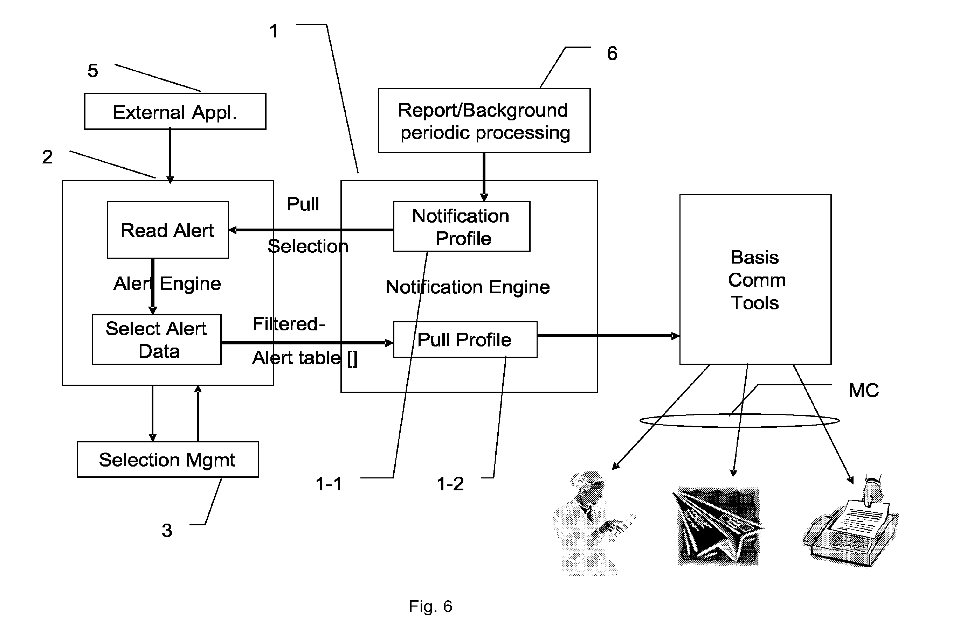

The pull mechanism, refer to Fig. 6, works with a report that is frequently scheduled and collects all the alert monitor settings of pull mechanisms that need to be evaluated for notification. In this context, one can define a recurrence time interval and a start time. These parameters are used to compute when alert settings need to be re-evaluated to send out the corresponding alerts. The pull notification 410 is started from within alert notification engine 1, 100. There is no external application interface needed to trigger it. It is performed by a report processing 6, 410 that periodically checks for notification profiles that are valid for pull notification and that need to be evaluated. The notification profiles have a recurrence time (and offset). When the current time is greater than the last execution time plus the recurrence interval, a notification profile becomes active: the report starts its evaluation. To evaluate a notification selection for the pull notification, the notification selection ID is passed to a selection method of the corresponding application. This method returns alerts valid for notification. To enable escalation rules the method needs to be sensible to distinguish confirmed (resolved) from unconfirmed alerts, possibly with further time restrictions (as explained in the paragraph on the alert notification profile).

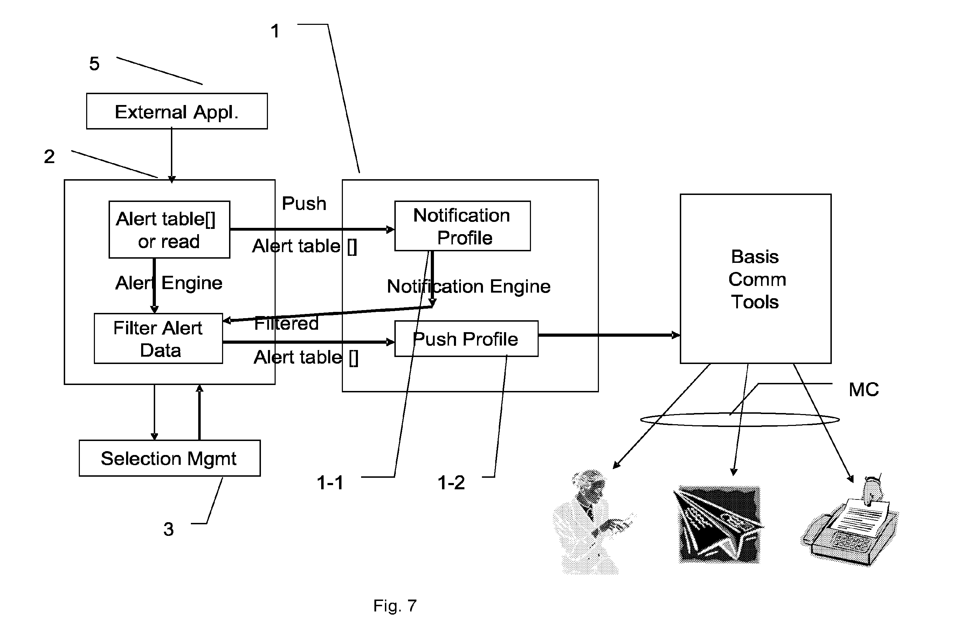

The push mechanism, refer to Fig. 7, works for database alerts. In addition there is the possibility to trigger the pull mechanism and hence notification through an event interface that can integrate with event management or other applications. The push notification 420 is started from an external application 710. In the present embodiment, there is integration with APO alert monitor database 700 alerts, but the concept is more general. Push notification works by sending a list of alerts with their alert types, priorities and parameters to the alert notification engine 1, 100. The alert notification engine looks for active push profiles and calls back with the selection ID into the application to select the alerts out of this list that are relevant for distribution. A reason code can be given with the list of alerts and will be included into the alert messages.

Only database alerts are available for the push mechanism. The occurrence of dynamic alerts can only be determined when actively searching for them, i.e. when pulling alert information.

Event based notification 430 is triggered from an external application by calling an appropriate method of the alert notification engine. No alerts are given with the call. Instead the alert notification engine 1, 100 checks for notification profiles that are event based and active. It then starts an evaluation of the corresponding selection IDs as in the pull case. As for push notification, a reason code can be given with the event and will be included into the alert messages.

Escalation processes are modeled by defining notification profiles that extend to unconfirmed alerts only, possibly with further time restrictions. This was explained for the alert notification profile above. The selection methods of alerts provided by the applications have to be able to distinguish unconfirmed alerts in order to allow escalation processes to unfold. For APO alert monitor 700 this will be handled by the "read alerts" methods.

The following information may be stored in an application log:
- notification profile 1-1, 628;
- notification selection ID;
- Recipient:
   User (if applicable)
   Partner (if applicable)
   Email address (if applicable)
   Phone number (if applicable);
- Message mode;
- Message profile;
- Messaging successful or error message;
- Time of messaging.

This serves to identify what information has been extracted for distribution. The full content of the messages is not stored.

For a limited time messages are stored in alert management for viewing in the alert inbox. This can be used to keep track of alert message content of those messages that are sent via the alert management for a short time span. Expiration time for storage can be defined in the notification profile.

Configuration is needed in the following areas:
- Defining applications that use alert notification and their implementation of alert notification's interface;
- Defming message modes that should be available to users;
- Defming central alert messaging server: this is done within the alert management framework.

Advantageously, no data volume problems are to be expected, because the data volume for messaging is limited by the fact that it has to be useful for humans to use. Also, the collective and aggregated message modes limit the number of messages that are created and have to be handled by alert notification engine and alert management.

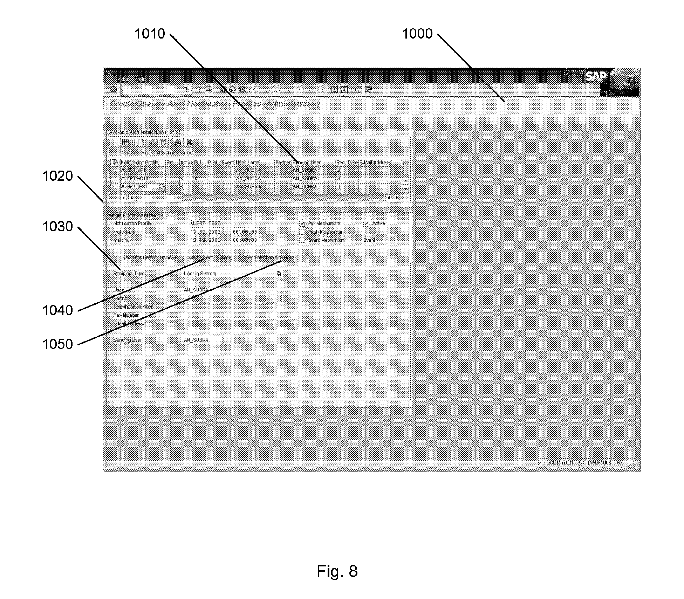

Figs. 8 to 12 show, by way of example, screen prints of the alert notification engine while executing the maintenance functions for the alert notification profiles as described above. Screen 1000 of Fig. 8 comprises several fields. Field 1010 displays available notification profiles, which are named ALERT NOT, ALERT NOTIFI, AMON TEST, along with some of their current settings. The single notification profiles can be selected therefrom, and their settings can be displayed and changed by the register cards 1020, 1030, 1040, 1050.

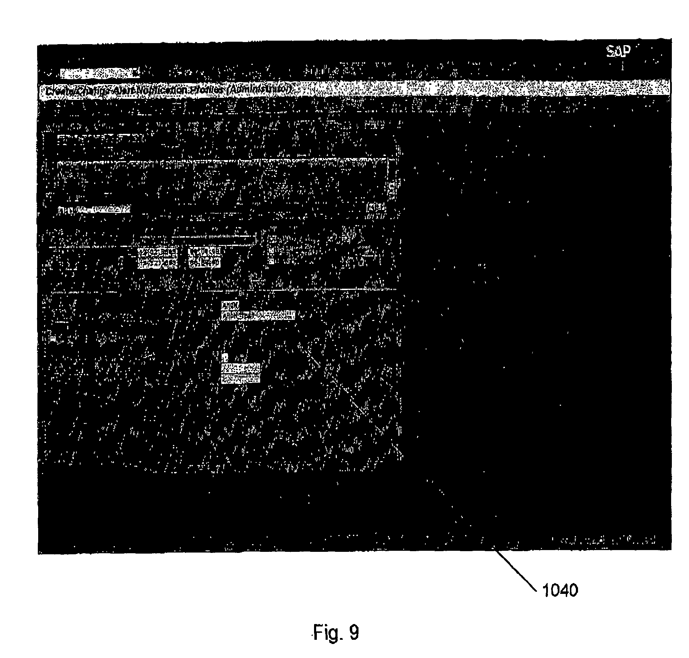

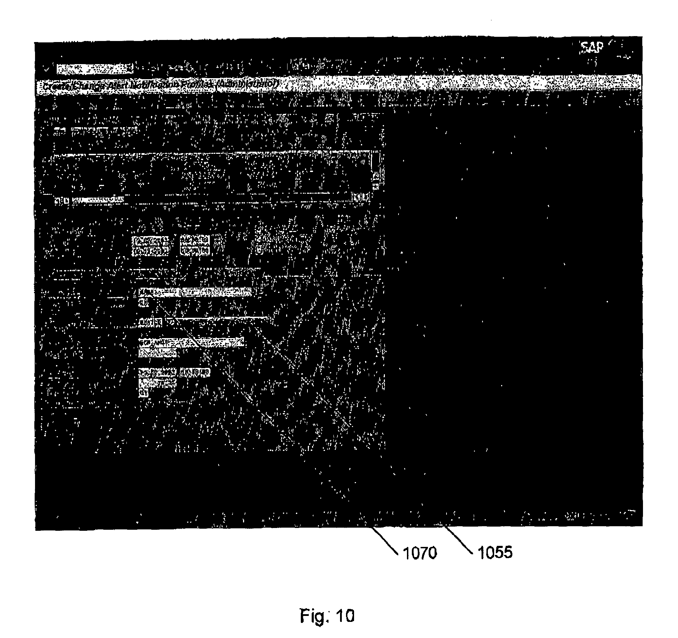

In the single Profile Maintenance register card 1020, the notification, profile ALERT TEST is selected. It is valid from February 12, 2003 to December 12, 2003, and is an active profile applying the pull mechanism. The user name and the name of the sending user is AN_SUBRA. Register card 1030 allows defming the recipient of alerts, register card 1040 allows setting the minimum priority and the minimum age of alerts to be sent, see Fig. 9 for further details. Register card 1050 (Fig. 8) allows selecting the send mechanism, i.e. the message channel to be used for transmitting the alert message, see Fig.10 for further details. As can be seen from Fig.10, the message channel to be used may be time-dependent. The time-dependency may be set in the pull-down menu 1055. In the same register card 1050, the pull start date and the pull interval as well as the pull calendar may be set.

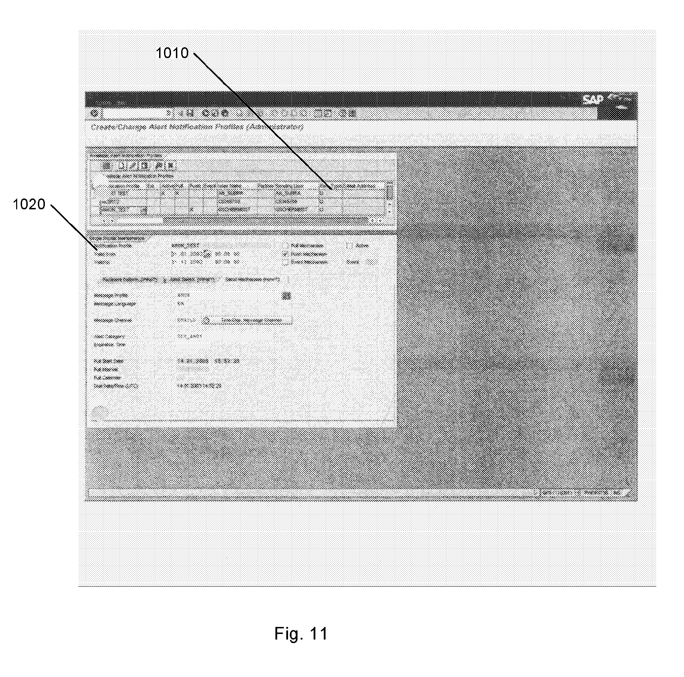

In the screen print of Fig. 11, examples of other alert notification profiles in field 1010 are provided. The third notification profile AMON_TEST, which is selected in this example for changing the settings, is applying the push mechanism, see Single Profile Maintenance register card 1020.

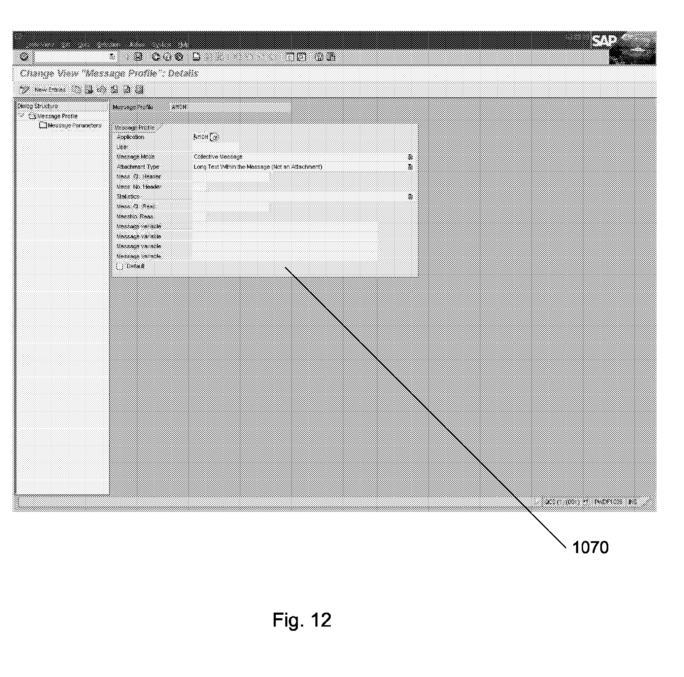

Register card 1070 for defining the message profile is shown in the screen print according to Fig. 12. As can be seen from register card 1070 in Fig. 12, depending on the message profile, the message mode, attachment type and further parameters for alert messages can be set.

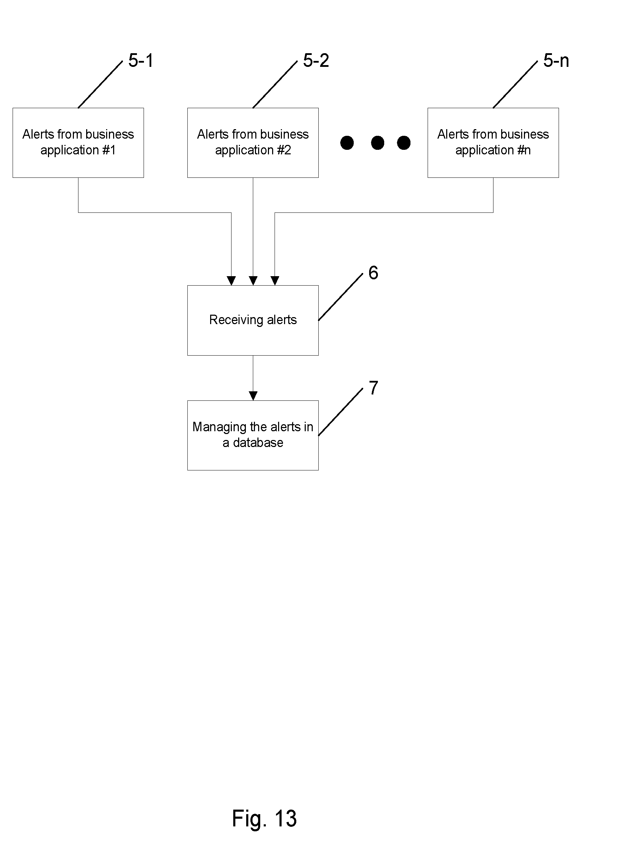

A further embodiment of the invention is described with reference to Fig. 13. The alert engine 2 is a configurable module to manage the database storage of alert data. Through the configuration of alert types, the alert engine 2 can support various processes and applications of supply chain management mySAP SCM.

Detection of exceptions and creation of corresponding alerts is performed by applications 5-1, 5-2, ...5-n that are connected to the alert engine and use its services for a unified handling of alert messages. The alert engine allows the selection of alerts by arbitrary alert parameters.
Alerts due to exceptional situations, originating from applications 5-1, 5-2, ...5-n are received in step 6, whereby the alerts are represented as objects, each object corresponding to one of a number of configurable alert types.

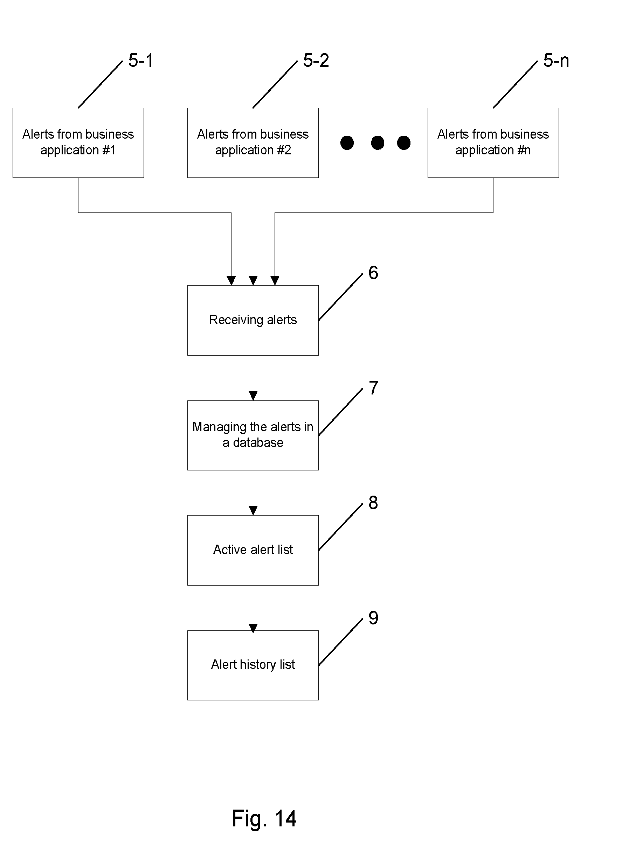

In the embodiment of Fig. 14, the alerts are managed in a database at step 7. Further, an active alert list is maintained, step 8, in which alerts are inserted which have a valid time information, and an alert history list is maintained in which alerts which are no longer valid are moved from the active alert list, see step 9.

Alerts according to the invention are instances of a class of entities, which are described by an alert type. Alert types can be associated with a particular application. Each alert type represents a different structure to store alert information details.

The alert structure specifies a set and a sequence of parameters relevant for one or several alert types. Some or all of the alert parameters of an alert structure can be chosen to be relevant for selection. Alert types define the alert's parameters, message text and the association of placeholders in the message text with specific parameters. The parameters themselves also have configurable date types and descriptions. For each alert type, a corresponding generated data engine holds the alerts of that type.

Alert types are configurable. Through configuration of alert types, the alert engine can support all processes and applications of the supply chain collaboration platform. The possibility to configure new alert types is particularly useful in connection with the configurable data types employed by the transactional data management and with configurable functions in the supply chain management solution mySAP SCM. For example in a collaboration process involving collaboration objects of different partners collaboration functions could be used to compute macros that determine alert situations in the synchronization of the supply chain and set the appropriate alerts. The alert parameters are provided from collaboration objects' data. Both alert type and data type are configurable as well as the alert condition computed and checked by the collaboration function.

Each alert has exactly one alert type. Upon activation of an alert type, the alert engine generates code that allows selecting alerts according to these parameters.

The alert engine is designed for high data volume and high throughput scenarios. The introduction of different sets of tables for different alert types helps to limit the number of table entries that need to be searched for particular alert information.

Alerts contain the following data:
- Alert ID to uniquely identify the object;
- Alert type;
- Message (textual description of alert situation);
- Alert parameters: Set of fields that describe business and control objects associated with the alert. These objects are used for display and follow-up actions on an alert;
- Alert scope: The alert scope data describe the relevance of an alert for specific partners and users. Its use is optional and determined by the alert type;
- Alert feedback information, e.g. who acknowledged an alert and when;
- Alert status information. Status data are set by the applications that use the alert engine or in user interface that shows alerts. They can be used to control follow-up actions that are required by an alert;
- Validity time interval;
- Priority;
- Comments on alerts as links to a notes management with information giving the time, partner and user that entered the comment

The set of parameters is variable and is configured by the alert type of the individual alert. For each alert type, a corresponding set of generated database tables holds the alerts of that type. Selection over various alert properties, in particular over all or some of the alert parameters is possible. Applications can use special parameters - the alert application areas - to identify sets of alert objects that are created and deleted by a particular algorithm. This simplifies the search for alerts that are obsolete.

Via user interfaces, the following configuration tasks for the Alert Engine can be performed:
- Maintain alert type;
- Maintain alert structure type;
- Maintain alert parameter;
- Activate alert type.

In a further embodiment, the alert engine according to the invention can be used for alert management. External services can use the alert engine to store and retrieve alerts.

The external services have to take care of deleting obsolete alerts if the alert does not persist any longer. This task may become complex if different functions in one or different services monitor the same alert conditions. To deal with this task, all alerts are subdivided into different groups according to the following criteria:
- Alert type;
- Application (internal or external engine or service): This field is usually used to distinguish the origins of the alerts such that a group of services that posts alerts does not interfere with alerts from other services;
- Application area: this is a free field that applications may use to distinguish between alerts handled by different functions within a service so that different functions of a service can create and delete alerts without interference to alerts from other services;
- Individual parameter values.

By using this system of alert properties, different scenarios of alert management can be implemented:

All applications (i.e. supply chain collaboration services or external systems) that handle alerts have to retrieve or delete the alerts that have already been created by their application and application area in order to determine whether these alerts persist or have to be deleted:
Firstly, different engines may usually access separate alert data. This is facilitated by criteria of alert type and application.
Secondly, different functions (e.g. for macros executed within collaboration processes) access separate alert data. The easiest way to set the correct alerts is to delete all alerts belonging to a function first, and then to create new alerts depending on the current situation. More complex alert handling, which leads to a more meaningful alert history, can be achieved keeping old alerts if the alert situation is unchanged or even changing alert parameters when the parameters cauterizing an alert are changed but the alert itself persists. This joined set of alerts can be built employing different alert types, and application areas.
Thirdly, different functions of one engine may manage (partially) shared alert data. In this case, the individual functions have to select the alert data by appropriate alert parameters in order to determine which alerts are to be deleted or to be changed. Each of the functions has to insure not to delete alerts whose alert situation persists.

The following list displays a typical example of alert types in the Inventory Collabaration Hub (ICH) application of mySAP SCM:
- No Stock;
- Stock Under Minimum;
- Stock Over Minimum;
- Message Validation;
- New Release Received;
- Release Acknowledged;
- Advanced shipment notification(ASN) delivery time is in the past;
- Goods receipt different from ASN quantity.

The alert engine provides functions for application services on the ICH platform to manage alerts. For this purpose, the alert engine offers generic interfaces to manipulate and retrieve alerts of any alert type:
- Create alerts;
- Change alerts;
- Withdraw alerts;
- Query (retrieve) alerts
- Query a history of alerts;
- Query a historic snapshot of alerts.
- Query history of comments associated with alerts

Interfaces of the alert engine are in principle also accessible for all other systems outside of the ICH platform. In particular, the alert engine could be used to collect alerts from different systems and to share them with partners. This could include e.g. alerts sent by a connected Advanced Planner and Optimizer (APO) alert monitor. APO alert monitor is a part of the APO supply chain planning solution within the mySAP SCM software product delivered by SAP.

Advantageously, any user group that participates in or monitors industrial processes on the supply chain collaboration platform is able to make use of the alert engine. Within ICH there are user interfaces to present alerts of the Alert Engine to users of various partners, where the partner relationship determines the scope of the alerts that are visible to a user:

One of these interfaces is the alert list view, which offers a list display of the alert information in a grid. The details to be displayed, i.e., the visible parameters, can be configured for each alert type and collaboration book view.

Another interface is the alert overview, which offers a two-dimensional aggregated view on the number of alert by characteristics. This view displays the number of alerts as a key figure in a grid spanned by the alert's parameters as characteristics. Drilldown and aggregation is possible by adding or hiding additional alert parameters. The alert overview is used to find problem spots within the collaboration supply chain planning or supply chain execution processes.

The alert engine provides a means to notify partners or more specifically user groups associated with partners. This functionality uses a general notification service. With the notification service, the alert messages to be communicated can be configured in the sense that partners and users can subscribe or can be associated to alerts of a certain type with certain parameters. The notification can be achieved using e-mail, fax, pager, cellular phone messages etc.

In a further embodiment, the alert engine user interface uses a notes management service and supply chain collaboration engine to manage textual information.

The Alert Engine offers the possibility to store a history of alert objects for retrospective analysis. The alert type determines whether alerts are to be stored in the history. Alerts that are no longer valid are automatically moved from the list of active alerts to a list of past alerts. Applications or users can also actively delete alerts, which are then transformed to the alert history, too. Similarly the alert history contains former versions of alerts that have been changed by an application. The alert history tables directly resemble the corresponding alert tables with additional information on time, user and mode of change.

Regularly entries in an alert history are only created, not changed or deleted. However, there is a function to re-organize such data. Alert history is kept for audit trail functionality and for reporting on the frequency and severity of exceptional situations in the connected applications.

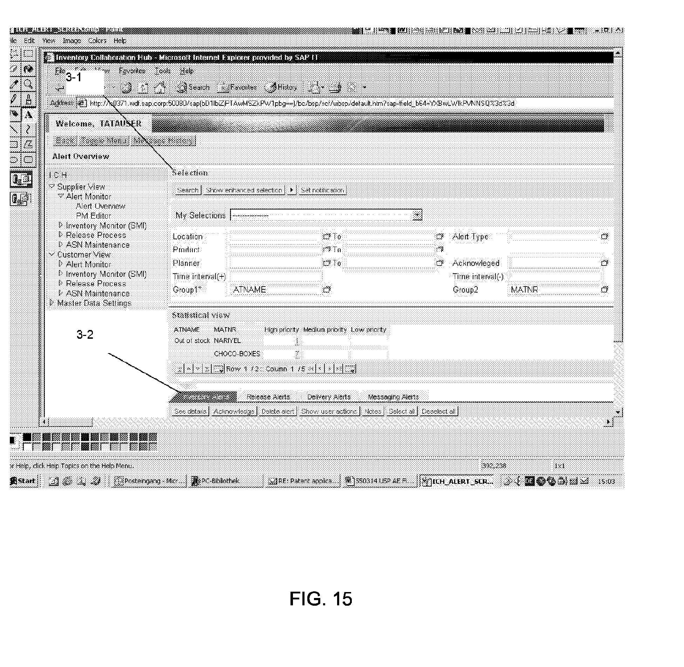

Fig. 15 shows alerts as they are displayed in the example application. The field 3-1 comprises a selection menu for selecting alerts. The field 3-2 allows to select the display of different kinds of alerts, i.e., inventory alerts, release alerts, delivery alerts, and messaging alerts. In the displayed example, the inventory alerts have been selected for display. Therein, field "location" denotes the external application where the respective alert originates. The field "Alert Type" denotes the type of alert. The screen itself is not part of the alert engine.

In the following, the functions of the Alert Engine are described in more detail, and the corresponding database structures are given. Descriptions and language dependencies in the database design are not taken into account.

Alert types are based on messages and structured data (alert parameters). Messages are based on the concept of SAP R/3 Advanced Business Application Programming (ABAP) error, warning and information messages. In addition, a numerical priority can be given to any alert.

Messages provide a short and a long text that can be finalized at run-time using placeholder variables related to alert parameters. Messages are language dependent.

Alert parameters are given by an alert structure that is a sequence of alert elements. Each alert element specifies a data type and description and whether it can be used for selection.

The alert engine 1 itself does not provide a notification mechanism. Instead, it makes use of the alert notification engine, as described above, to allow the communication of alert messages to predefined destinations by fax, e-mail, SMS, pager, etc. One possibility for such a notification engine to be built on the supplied chain collaboration platform is to use the alert framework that is part of SAP technology platform SAP Netweaver (a software product delivered by SAP).

Hereby, the push scenario as shown in Fig. 7, starts from one or several external applications 5-1, 5-2, ...5-n with alerts. The alert engine 2 stores the alerts and passes them to the alert notification engine 1. The alert notification engine 1 will determine the relevant notification profile 1-1, and then make the call back to the alert engine 2 to filter the alert data according to the specified selection ID. Push profile 1-2 comprises data useful for communicating the alerts via specified message channel to the respective users.

Then, the alert engine filters the alerts based on criteria determined by the alert notification engine 2. After filtered alerts are returned to the notification engine and further being processed by basis communication tools 4, they are sent to the destination via the channel defined in the respective notification profile 1-1.

In the pull scenario according to Fig. 6, alert notification is triggered from a report process 6, which is a direct or periodic background processing 6. Based on selection criteria, the alert notification engine 1 transmits calls to the alert engine 2. Then, alert engine 2 reads data from the alert engine data storage in order to prepare the selected alerts. Push profile 1-2 comprises data useful for communicating the alerts via specified message channel to the respective users.

The alert engine uses an API from the selection management 3 for selecting alerts, which are then returned to the notification engine 1. The alerts will be further processed by basis communication tools 4 and transmitted to the destination via the channel defined in the notification profile 1-1.

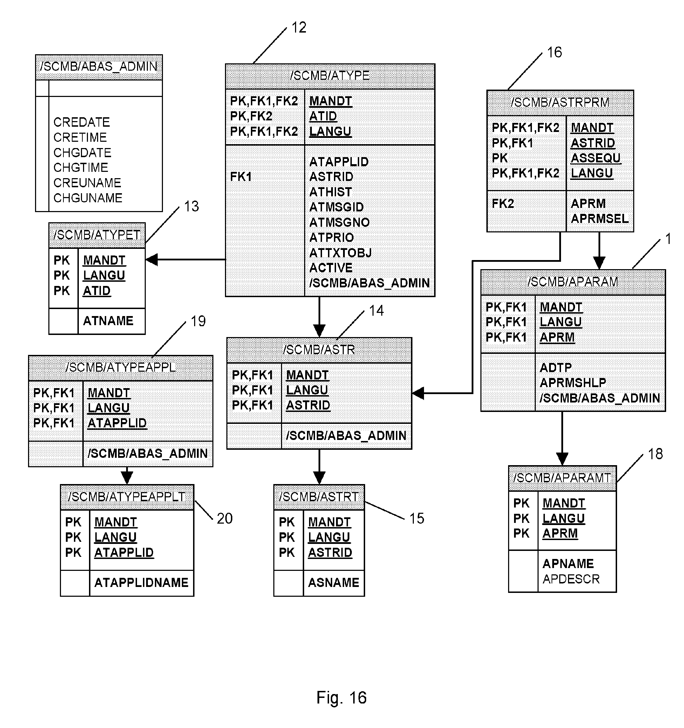

In one embodiment, alert types are based on the data model of Fig. 16, which also shows the foreign key relationship between alert type, alert structure and alert element. The details of the data objects are explained below.

The objects in Fig. 16 are as follows:
- /SCMB/ATYPE 12: alert type: message and alert structure;
- /SCMB/ATYPET 13: alert type text name;
- /SCMB/ASTR 14: alert structure for structured alert information;
- /SCMB/ASTRT 15: alert structure text name;
- /SCMB/ASTRPRM 16: alert structure element to describe one alert parameter of the alert structure;
- /SCMB/APARAM 17: alert structure parameter value;
- /SCMB/APARAMT 18: alert structure parameter text name;
- /SCMB/ATYPEAPPL 19: alert type related application;
- /SCMB/ATYPEAPPLT 20: alert type related application text name.

Below, these objects are explained in more detail.

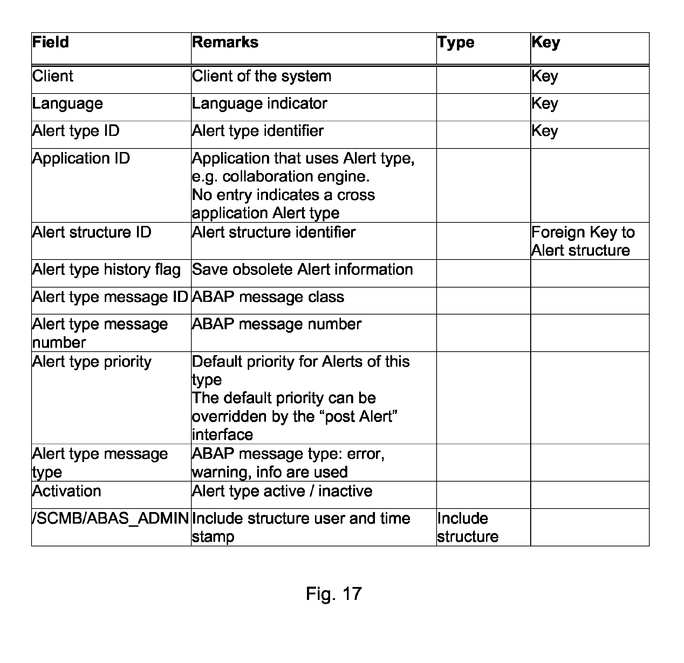

When an alert type is active, its corresponding alert table 12 is created. Fig. 17 "alert table" displays such an alert table. Only for empty alert and alert history tables, an alert type can be deactivated. Only for inactive alert types, the corresponding alert structures are to be changed.

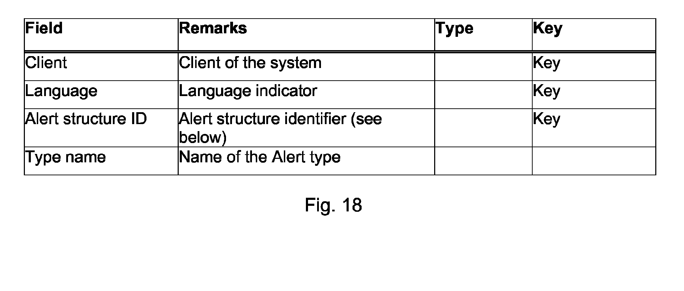

The text name attach /SCMB/ATYPET 13 to alert type has the structure as given in Fig. 18.

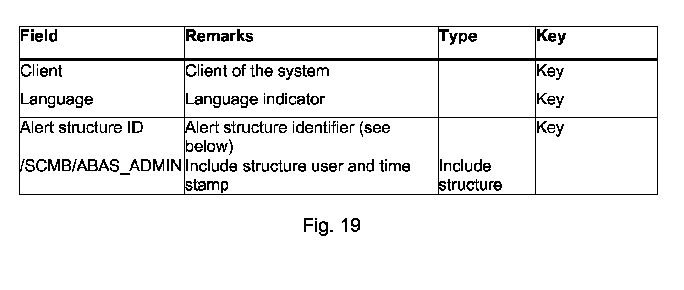

The alert structure /SCMB/ASTR 14 consists of a header and the sequence of alert elements, as given in Fig. 19. Alert structures can be active or inactive. Only inactive alert structures can be changed. Only active alert structures can be used in active alert type.

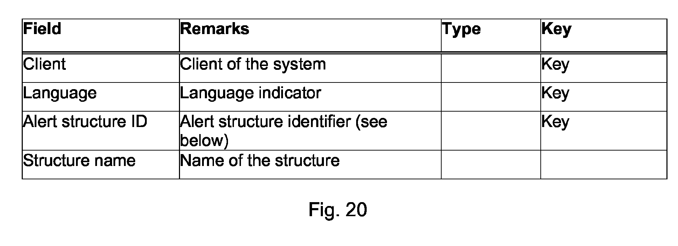

The text name attach /SCMB/ASTRT 15 to alert structure /SCMB/ASTR 14 is given in Fig. 20.

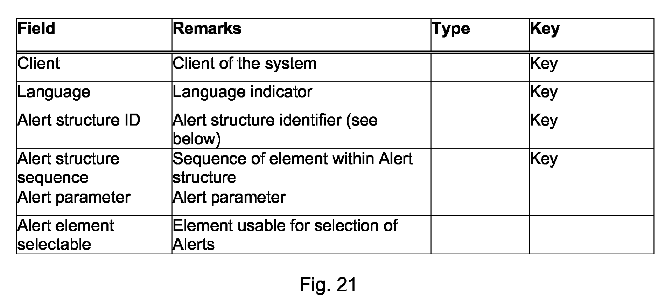

The alert structure parameter /SCMB/ASTRPRM 16 is given in Fig. 21. This alert structure element describes one alert parameter of the alert structure 14.

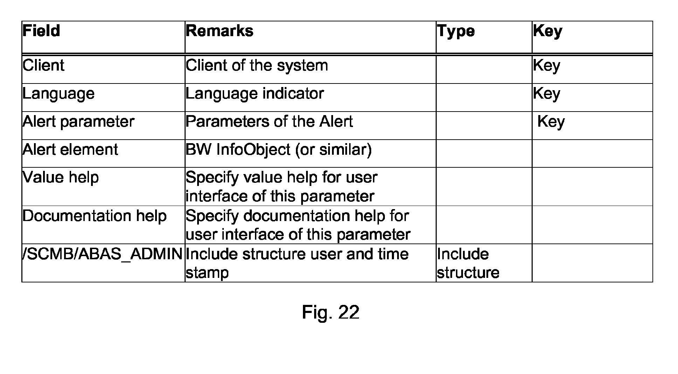

An alert parameter describes a field to be used in the alert engine. It is specified by a name and its data type. Optionally one can attach a search-help for input on selection screens. Fig. 22 shows the data object for the alert parameters 17. It specifies name, description, data type and length of the alert parameter, and describes the fields of the alert tables. Within each alert structure, the InfoObjects have to be unique.

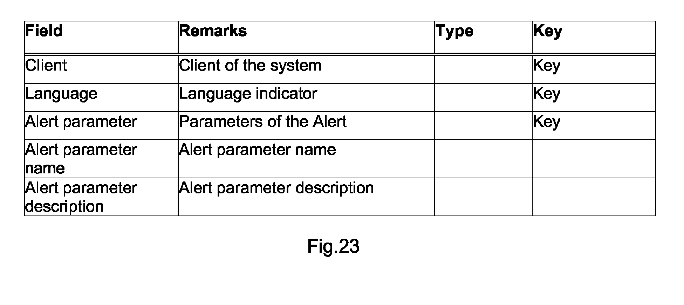

The alert parameter text /SCMB/APARAMT 18 according to Fig. 23 specifies the text name attach to alert parameter.

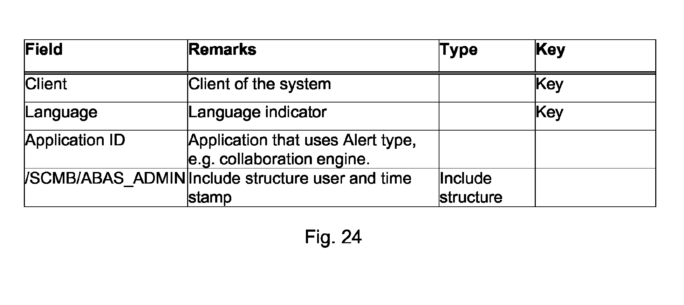

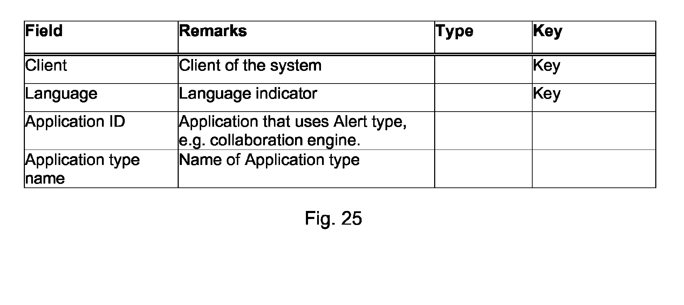

Fig. 24 defines the object of an alert type related application. Fig. 25 defines the text name attached to application ID for alert engines.

The alert data management allows creation, change, and deletion of alert records. It is also used to select alerts of given type, time interval of validity and selection of alert parameters.

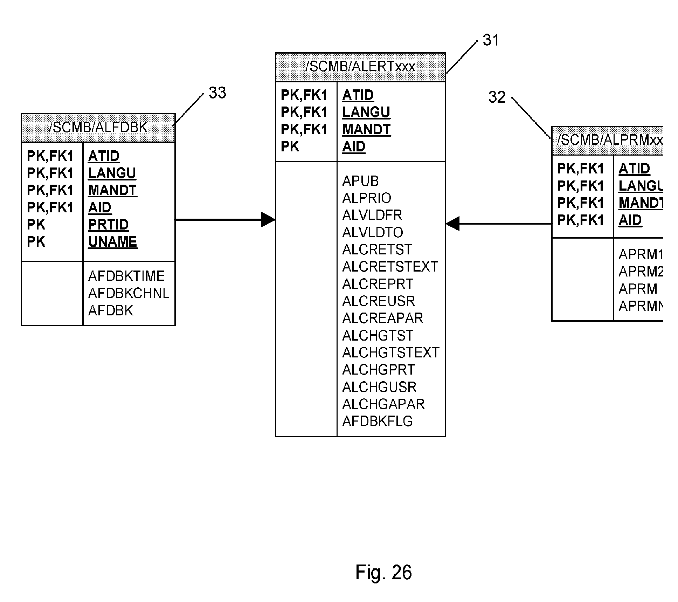

The diagram according to Fig. 26 represents the alert data model, which is explained in detail in the following paragraphs
- /SCMB/ALERTxxx 31: alert table for a specific alert type;
- /SCMB/ALPRMxxx 32: assignment of alerts to partners;
- /SCMB/ALFDBK 33: feedback information to alerts.

Each alert is identified by a globally unique alert ID (GUID) and an alert number, which is unique for each instance of an alert engine and which can be used to identify the alert for user interaction.

The validity time interval of an alert is a filter for alert selection. Alerts that are past their "valid to" times are deleted and can be kept in the alert history table if the alert type is configured this way.

The application ID and application area determine the engine or external system and the function executed by that engine or system that created or changed an alert. This is used to divide the set of all alerts into different subsets related to particular functions, so that a specific function that posts alerts may or may not influence the alerts created by other functions.

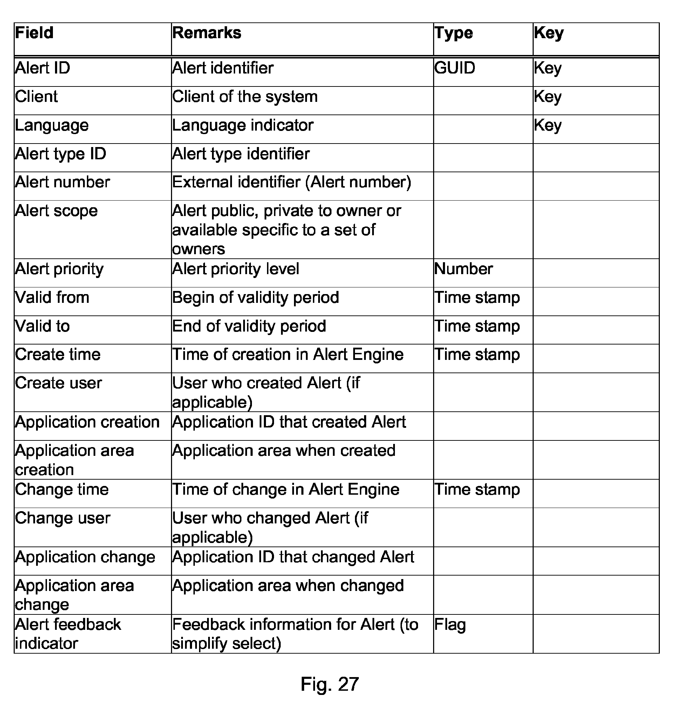

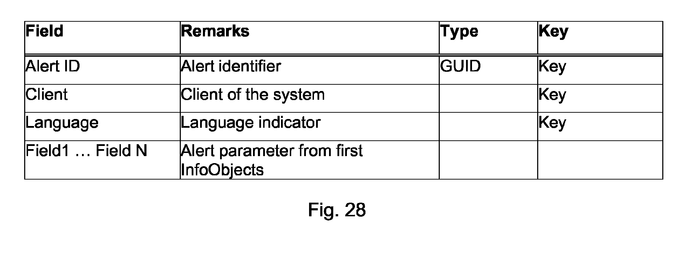

Alerts are stored in tables of the form given in Fig. 27. Fig. 28 displays the structure of the alert parameters /SCMB/ALPRMxxx 32.

Notes and acknowledgement of alert situations can be stored depending on partner and user or user group. Notes can be public (which means that they are available for all partners specified by the alert and alert-partner tables) or private. The notes themselves and a history of their changes is handled by a document management service on the mySAP SCM platform.

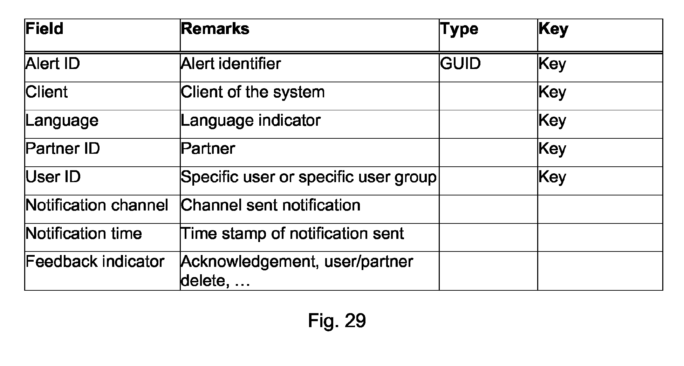

A partner or user can also change the status of an alert to "acknowledged" (those alerts are still visible although in a different way) or "deleted" (these alerts are not selected any more for this partner or user. This partner or user specific "deletion" is distinct from the deletion of the alert itself in the sense that it only affects the partner or user specific view. Interactive deletion of the alert itself may also be allowed for certain users (authorization). Fig. 29 displays the data structure /SCMB/ALFDBK 33 for the alert feedback.

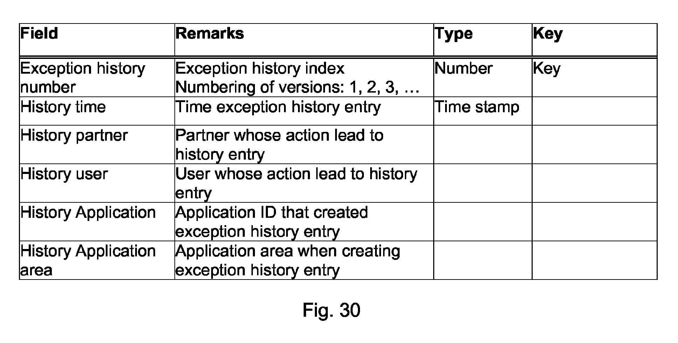

Alert history tables are kept for audit trail functionality. Fig. 30 displays the data structure of an alert history table /SCMB/ALFDBK 33.

Alerts can be stored in the alert history by any of the following actions:
- They are changed by an application.
- They are deleted by an application.
- They are deleted by user interaction (non user-specific deletion).
- They become obsolete (validity time interval) and are either selected or found by a reorganization function.

The alert history tables directly resemble the corresponding alert tables with the following additional fields. Regularly, alert history entries are only created, not changed or deleted. However, there are functions to re-organize these tables.

The deletion of the alert from the tables that contain the current alerts and the move to the alert history is done automatically whenever such alerts are handled by the alert engine, i.e. in connection with user interaction or the alert engine - engine interfaces. In addition, a specific report may be scheduled to perform this task.

Similar tables keep track of the history of alert feedback, alert partners, and alert external identifiers: The additional key field is the same as for the alert history itself.

Applications external to the Alert Engine's system may post alerts, so that the Alert Engine may collect alerts from different systems to provide a single point of access to partner for alert based messaging. This corresponding XML interface for alert posting would correspond closely to the "post alert" interface described above. XML message standards for posting alerts could also be supported and mapped to the Alert ENgine's XML interface.

The supply chain management services use the "query alerts" interface to retrieve alert information from the alert engine. This interface imports a selection of alerts to be retrieved, parameters that specify the extent of the alert information to be extracted and exports a list of alerts with associated data such as notes, external IDs etc. Services need this interface to determine alerts that need to be changed or deleted because the alert situation has been changed.

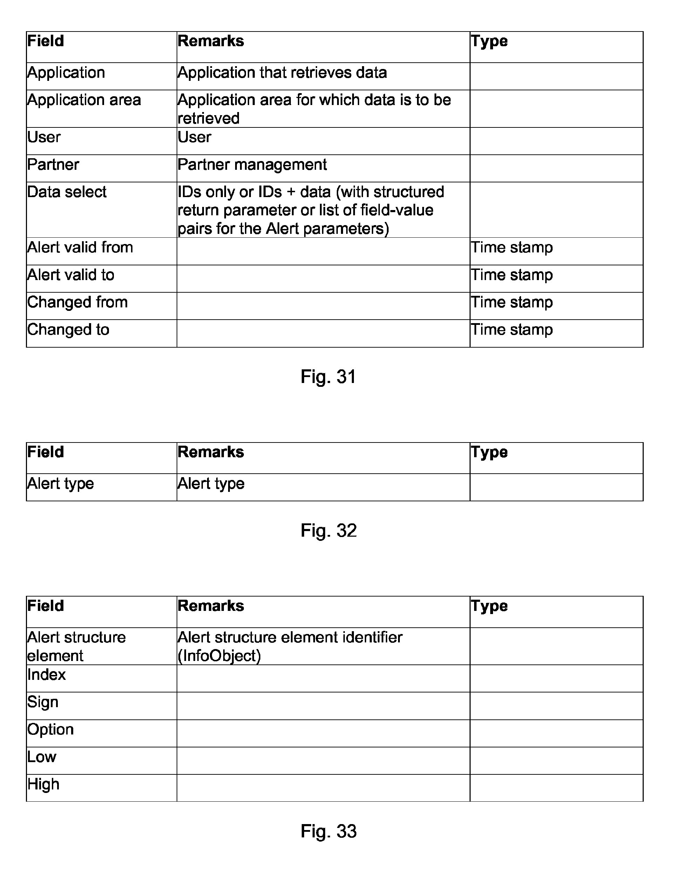

Parameters to specify application, application area and type of data to be read by the alert engine are given in Fig. 31. A table to specify alert types to be retrieved is given in Fig. 32. A table to specify alert parameter selections is given in Fig. 33.

For exporting to other applications, alert type and alert information are given by the structure of the alert table for this alert type in one of the following forms:
- Represented by table of tables: for each alert type with the corresponding structures;
- Represented by a table of general alert information with the alert parameters in a separate table (as for the post alert interface).

These tables may be accompanied by the corresponding alert history information (if requested). Table to represent external alert identifiers (if requested). Table to represent alerts, feedback indicators and associated note IDs (if requested).

Applications external to the Alert Engine's system may retrieve alerts from the Alert Engine, so that the Alert Engine not only collects alerts from different systems but also provides a means of distributing them to other services (compare also notification mechanism below). The corresponding XML interface for alert retrieval could resemble closely the "Query alert" interface described above.

As an important part of collaboration processes, the Alert Engine is capable of sending alerts message to participants in supply chain collaboration processes. Alerts posted by applications are evaluated to determine whether they are relevant for communication.

The determination of relevance for communication is based on the following alert data:
- alert type;
- alert partners;
- alert new or changed;
- alert application and application area;
- alert parameter conditions.

This information is mapped to a message category and passed to the notification or communication mechanisms along with the alert message data.

A general notification service on the supply chain collaboration platform allows notification of partners by various means such as email, SMS messages to mobile phones, pagers, fax etc. The partner, user group and users to be notified for a given message depend on the message category, time and may further depend on the message's content.

The assignment of partners, dependent user groups and users to messages can be configured by the owner of the notification service but can also be based (in parts) on a subscription mechanism. Users of authorized partners may be able to specify their interest in certain messages, their preferred means of communication and also may be able to define substitute representatives within their user groups.

Selections of alerts are done using the selector part of the Alert Monitor user interface collaboration book. The selection is based on the following selection criteria
- Validity interval of alert (overlap logic);
- Alert type(s);
- Alert parameters: available for selection are all alert structure elements that are marked selectable for one of the alert types chosen;
- "Acknowledged alerts": flag to choose whether to display only new or also acknowledged alerts.

Selections can be pre-defined and assigned to partners and users. A user may be allowed to define its own selections. Users can mark and sort their selections as favorites/bookmarks.

The Alert Monitor is a user interface screen within ICH to display alert information in lists. Columns can be chosen to display only the most relevant data. Navigating from the alert, all alert parameters can be shown on an additional details screen element. The alert list allows users to view, create and change notes associated with alerts (see below). The alert list allows users to acknowledge alerts. After acknowledgement, alerts will be visible only upon specific request (user dependent or partner dependent). The alert list allows for user dependent and partner dependent deletion of alerts. This "soft" deletion makes the alert invisible to the respective partner or user. The alert list may allow a user with the right authorization to fully delete an alert from the list of current alert. This "hard" deletion makes the alert invisible to all users and partners and transforms it to the alert history (if used for the alert type in question).

The alert overview is a two-dimensional display that displays the number of alerts depending on alert parameters. It can be used to analyze alerts across multiple characteristics and to find the critical spots in a supply chain. With the alert overview display, the x- and y-axis can be chosen to represent one or more alert parameters such as alert type, validity time, product, location etc., in a manner very similar to the dimensional grid display of time-series data in the collaboration book. The "key figure" is the number of alerts for the chosen alert types.

Past alert situations could be displayed in the same way as current alerts. The alert history's additional fields serve as additional alert parameters for the alert list and overview user interfaces.

The selection of validity and create/change times works for past exceptions in the same way as for current exceptions.

The authorization concept of the alert engine is specific for partner and user. The application data taken into account are alert types and certain alert parameters such as product, location and version. Actions performed on alerts are the actions described above for the user interfaces. In addition, there are authorizations to specify new alert types in connection with the authority to specify corresponding engine functions that create and delete such alerts.

As described above, alert structures and alert types can be freely defined. This is implemented through customizing transactions.

The distributed computer networks as mentioned above may be used, for example, for producing goods, delivering parts for assembling products, controlling technical or economical processes, or implementing telecommunication activities.

The present techniques can be implemented in digital electronic circuitry, or in computer hardware, firmware, software, or in combinations of them. Apparatus of the invention can be implemented in a computer program product tangibly embodied in a machine-readable storage device for execution by a programmable processor. Method steps according to the invention can be performed by a programmable processor executing a program of instructions to perform functions of the invention by operating on the basis of input data, and by generating output data. The invention may be implemented in one or several computer programs that are executable in a programmable system, which includes at least one programmable processor coupled to receive data from, and transmit data to, a storage system, at least one input device, and at least one output device, respectively. Computer programs may be implemented in a high-level or object-oriented programming language, and/or in assembly or machine code. The language or code can be a compiled or interpreted language or code. Processors may include general and special purpose microprocessors. A processor receives instructions and data from memories, in particular from read-only memories and/ or random access memories. A computer may include one or more mass storage devices for storing data; such devices may include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing can be supplemented by or incorporated in ASICs (application-specific integrated circuits).

To provide for interaction with a user, the invention can be implemented on a computer system having a display device such as a monitor or LCD screen for displaying information to the user and a keyboard and a pointing device such as a mouse or a trackball by which the user can provide input to the computer system. The computer system can be programmed to provide a graphical or text user interface through which computer programs interact with users.

A computer may include a processor, memory coupled to the processor, a hard drive controller, a video controller and an input/output controller coupled to the processor by a processor bus 21. The hard drive controller is coupled to a hard disk drive suitable for storing executable computer programs, including programs embodying the present technique. The I/O controller is coupled by means of an I/O bus to an I/O interface. The I/O interface receives and transmits in analogue or digital form over at least one communication link. Such a communication link may be a serial link, a parallel link, local area network, or wireless link (e.g. an RF communication link). A display is coupled to an interface, which is coupled to an I/O bus. A keyboard and pointing device are also coupled to the I/O bus. Alternatively, separate buses may be used for the keyboard pointing device and I/O interface.

## Claims

1. A method of transmitting alert notification messages, the alert notification messages corresponding to alerts, the alerts being indicative of exceptional situations in at least one industrial application, wherein the alerts from at least one industrial application (#5-1, #5-2, ..., #5-n) are collected (S1) , and at least one alert notification message is generated (S2) and sent out (S3) to at least one recipient (#1, #2, ...#n) through at least one transmission channel (MC) , whereby alert collecting, alert notification message generating and sending out is controlled (S4) according to an alert notification profile ( 1-1 ), the alert notification profile (1-1) being configure d to comprise information relating to at least one of:
a group of recipients;
a time schedule for transmission;
a channel of transmission (MC);
a method to create text out of the alert.

2. The method of claim 1, wherein the exceptional situation is defined as a relation of at least one variable of the industrial application to at least one predetermined value.

3. The method of one of the preceding claims, wherein the alerts are at least one of filtered, aggregated, bundled in statistic tables, according to configurable rules.

4. The method of one of the preceding claims, wherein the notification profile is administrated in the centralized engine.

5. The method of one of the preceding claims, wherein the alert notification profile is configured to further comprise information relating to a time schedule for retrieval of alerts from an industrial application.

6. The method of one of the preceding claims, wherein the alert notification profile is configured to further comprise a transmission format for the alert notification message.

7. The method of one of the preceding claims, wherein at least one alert is collected for notification which is sent by the at least one industrial application.

8. The method of one of the preceding claims, wherein at least one alert is collected from an industrial application in a process that is triggered by a predetermined event in the at least one industrial application.

9. The method of one of the preceding claims, wherein status information is collected relating to an alert.

10. The method of one of the preceding claims, wherein an alert notification message is re-sent depending on status information of the alert.

11. The method of one of the preceding claims, wherein the transmission channels comprise at least one of SMS, WAP, Fax, pager, telephone, cellular phone, electronic mail.

12. The method of one of the preceding claims, wherein the alert notification profile is administrated by a recipient.

13. The method of one of the preceding claims, wherein a plurality of alerts are aggregated in a centralized engine.

14. The method of one of the preceding claims, wherein the at least one industrial application is accessed in predetermined time periods for retrieving an alert for notification.

15. The method of claim 15, wherein the time periods are administrated in the centralized engine.

16. A method of storing alerts in a database, the alerts originating from at least one industrial application due to exceptional situations, whereby the alerts are represented as objects, each object corresponding to a one of a number of configurable alert types, wherein each alert type is configured to comprise at least one of:
an ID for uniquely identifying the alert;
information representative of the type of alert;
message text being descriptive of the alert;
a set of parameters representative of business or control objects associated with the alert;
an alert scope being representative of the relevance for partners or users;
feedback information being representative of time and identity of acknowledging the alert by a partner or user;
status information for controlling follow-up actions;
validity time information;
priority information.

17. The method of claim 16, wherein for each alert type a scheme of database tables and corresponding code segments to access the database tables are generated.

18. The method of claim 16 or 17, wherein an active alert list is maintained in which alerts are inserted which have a valid time information, and, separately, an alert history list is maintained in which alerts which are no longer valid are moved from the active alert list.

19. The method of one of claims 16 to 18, wherein the alert lists comprise the alerts together with information relating to the type of alert.

20. The method of one of claims 16 to 19, wherein alerts in the lists are selected according to predefined parameters.

21. The method of one of claims 16 to 20, wherein an alert is stored together with time stamp information, the time stamp information relating to the time of origin of the exceptional situation in the at least one industrial application.

22. The method of one of claims 16 to 21, wherein the alert is stored together with status information, the status information relating to an undertaken action with respect to the exceptional situation.

23. The method of one of claims 16 to 22, comprising storing a history list of commands made by users and partners relating to an alert.

24. The method of one of claims 16 to 23, comprising: Storing a history list of acknowledgement and status values set by users and partners relating to an alert.

25. The method of one of claims 16 to 24, comprising: Restricting the scope of alert to an application area, the application area being a parameter which is useful for the industrial applications to distinguish different sets of alert which are manipulated by different alert update processes.

26. A computer-readable storage medium comprising program code for performing the method according to one of the preceding claims.
